# FASCICULE DE BREVET EUROPEEN

(11) **EP 2 158 826 B1**
(45) Date de publication et mention de la délivrance du brevet: **28.03.2012**
(21) Numéro de dépôt: 09168030.6
(22) Date de dépôt: 18.08.2009
(51) Int. Cl.: A47J 19/00, A47J 43/25, B26D 1/29, B26D 5/10

(54) **Couvercle d'article culinaire**
Deckel eines Küchengerätes
Culinary utensil lid

(30) Priorité: 27.08.2008 FR 0855752
(43) Date de publication de la demande: 03.03.2010
(73) Titulaire: SEB SA, 69130 Ecully (FR)
(72) Inventeur: Plichon, Stéphane, 74350, ALLONZIER LA CAILLE (FR)
(74) Mandataire: Lemoine, Jean-Sébastien

(56) Documents cités:
- EP-A- 0 126 540
- FR-A- 2 818 182

## Description

La présente invention concerne un couvercle d'article culinaire adapté à reposer sur un récipient, le couvercle comprenant une manivelle d'actionnement d'un outil de travail, tel que dans une râpe à légume ou une essoreuse à salade.

On connaît un couvercle d'article culinaire du type adapté à reposer sur un récipient, le couvercle comprenant un organe de travail amovible et monté en rotation, et une manivelle engrenée à l'organe de travail et montée en rotation selon un axe de rotation non parallèle à celui de l'organe de travail.

Un tel couvercle est par exemple divulgué dans la demande WO 2007/073640. Cependant, afin de permettre une stabilisation et une amovibilité de l'organe de travail, la face inférieure de la périphérie de ce dernier repose sur un épaulement annulaire du couvercle, et la face supérieure correspondante est dentée de façon à coopérer avec une couronne dentée portée par la poignée qui est également amovible. Si un tel couvercle est facilement démontable pour permettre un nettoyage aisé des différents éléments constitutifs, il est très peu pratique du fait du faible rapport d'engrenage.

Un autre couvercle est décrit dans la demande EP 0126540 A1.

La présente invention vise à réaliser un couvercle qui permet un nettoyage aisé mais dont n'ayant pas l'inconvénient précité.

Selon l'invention, l'organe de travail comprend un outil et un moyeu qui porte un pignon denté par lequel est réalisé l'engrènement avec la manivelle et, quand l'organe de travail est en position d'utilisation, le pignon denté réalise son engrènement avec la manivelle, prend appui sur au moins un moyen de maintien de façon à définir la position de l'outil selon la direction de son axe de rotation, et coopère avec des moyens de verrouillage permettant d'empêcher tout déplacement de l'outil dans un plan normal à son axe de rotation.

Ainsi, l'organe de travail (et donc l'outil) est parfaitement stabilisé, tant axialement que perpendiculairement à la direction axiale, et du fait de son engrènement par son moyeu, le rapport d'engrenage est proche de 1 (ou égal à 1) et correspond à ceux des couvercles traditionnels, notamment ceux dont la manivelle est solidaire de l'outil.

D'autres particularités et avantages de la présente invention apparaîtront dans la description d'un mode de réalisation donné à titre d'exemple non limitatif et illustré par les dessins dans lesquels :
La figure 1 est une vue en perspective de dessous d'un récipient muni d'un couvercle conforme à la présente invention,
La figure 2 est une vue en coupe du récipient de la figure 1, selon le plan défini par les axes de rotation de l'outil et de la manivelle,

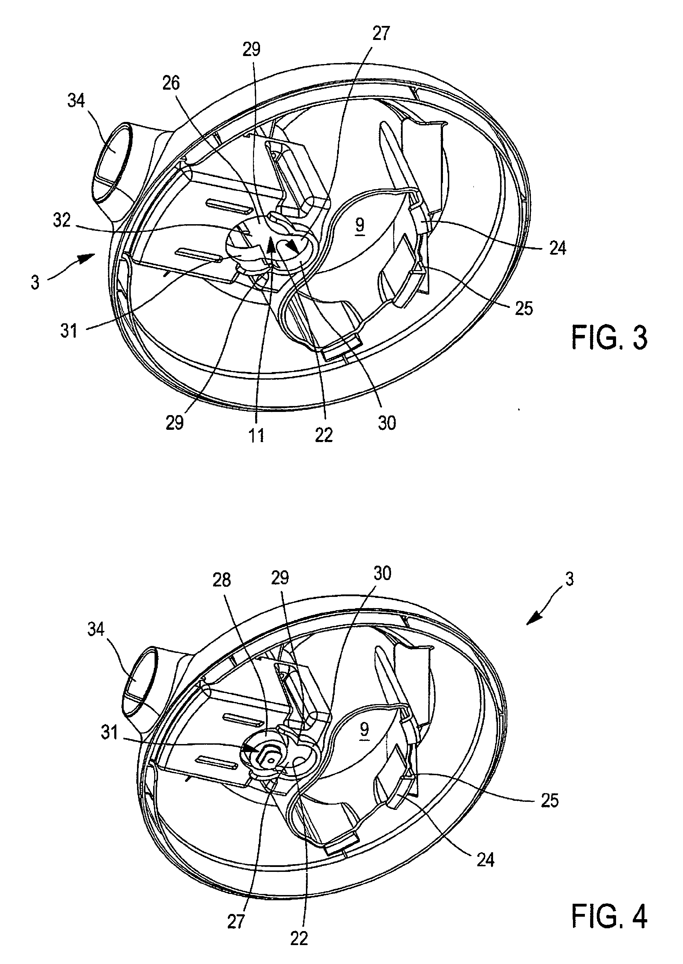

La figure 3 est une vue de dessous du couvercle, sans l'organe de travail, le clapet étant dans sa position d'ouverture,
La figure 4 est une vue similaire à la figure 3, le moyeu 13 de l'organe de travail étant disposé dans la portion élargie de l'ouverture d'articulation et dans l'orifice du clapet en position d'ouverture, et

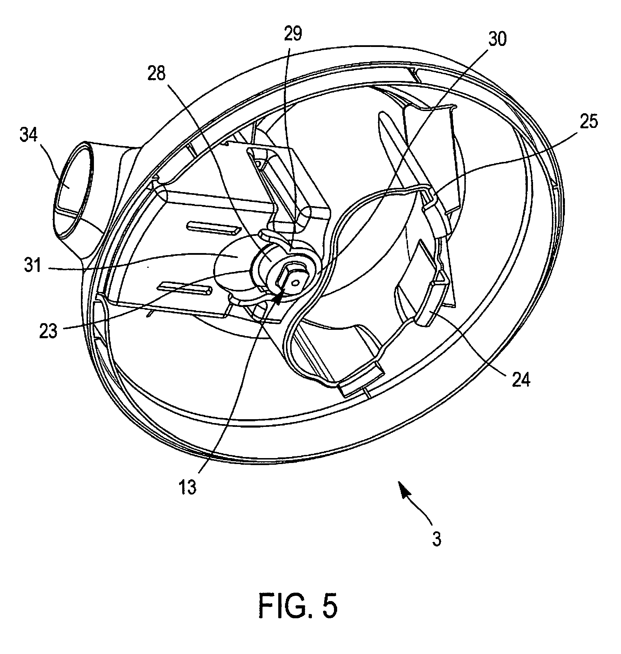

La figure 5 est une vue similaire à la figure 4, le moyeu 13 étant disposé dans la portion restreinte de l'ouverture d'articulation et dans l'orifice du clapet en position de fermeture.

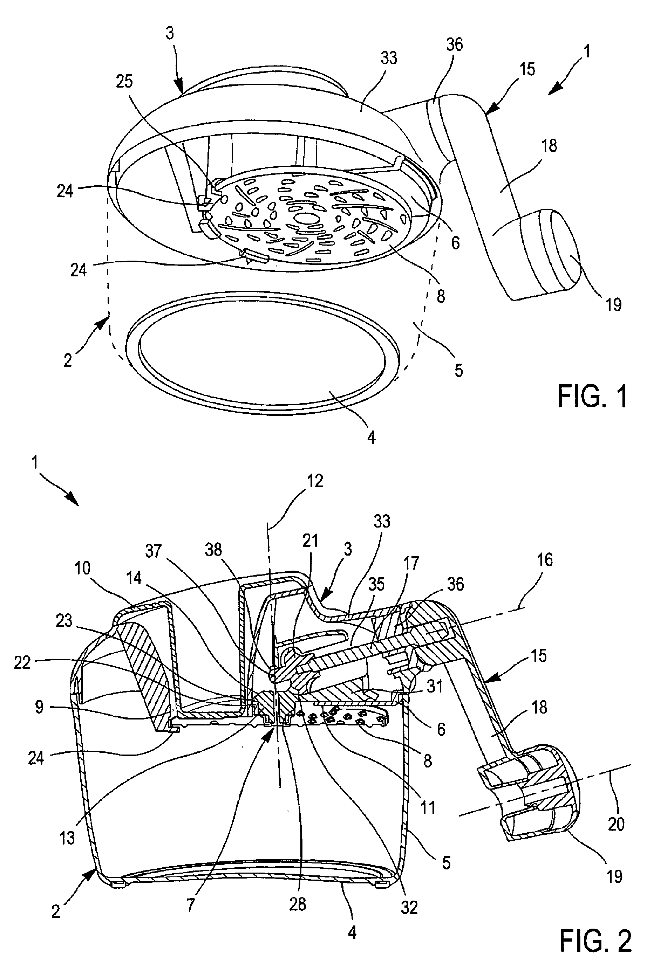

Comme illustré aux figures 1 et 2, un article culinaire 1 (ici, une râpe à légume) comprend un récipient 2 et un couvercle 3.

Le récipient 2 comprend une paroi de fond 4 et une paroi latérale 5 qui s'élève depuis la périphérie de la paroi de fond 4.

Le couvercle 3 repose sur le récipient 2, et dans le présent mode de réalisation prend appui sur l'extrémité libre de la paroi latérale 5. Toujours selon le présent mode de réalisation, le couvercle 3 recouvre l'intégralité de l'ouverture définie par l'extrémité libre de la paroi latérale 5.

Le couvercle 3 comprend une paroi inférieure 6 qui est adaptée à obstruer l'ouverture du récipient 2 (ici, la paroi inférieure 6 recouvre l'intégralité de cette ouverture), et un organe de travail 7 qui est porté par la paroi inférieure 6 et qui comporte un outil 8 adapté à permettre le travail des légumes.

Dans le présent mode de réalisation, la paroi 6 comprend un passage à légumes 9 pour l'introduction des légumes devant être râpés. A ce passage 9 est associé un élément poussoir 10 amovible du couvercle 3 permettant à un utilisateur de pousser les légumes de façon sûr, sans craindre d'être blesser par l'outil 8.

La paroi 6 comprend également une ouverture d'articulation 11 par laquelle est réalisée l'articulation de l'organe de travail 7.

L'organe de coupe 7 est monté en rotation par rapport à la paroi inférieure 6 selon un axe de rotation 12 qui, ici, est perpendiculaire à cette paroi 6 (en l'occurrence, l'axe 12 est vertical). Dans le présent mode de réalisation, l'organe de coupe 7 est formé par l'outil 8 (ici, un disque 8) qui s'étend perpendiculairement à l'axe de rotation 12 de l'organe de coupe 7 passant par son centre, et par un moyeu 13 solidaire de l'outil 8. Le moyeu 13 fait saillie d'une face de l'outil 8 et comprend, à son extrémité axiale libre, un pignon denté 14.

Le moyeu 13 traverse l'ouverture d'articulation 11, de sorte que la paroi inférieure 6 délimite un espace de travail dans laquelle se trouve l'outil 8 d'un espace d'engrènement dans lequel se trouve le pignon denté 14.

Le couvercle 3 comprend également une manivelle 15 qui est portée par la paroi inférieure 6 et qui est montée en rotation selon un axe de rotation 16 non parallèle à celui 12 de l'organe de travail 7. En l'occurrence, les deux axes forment entre eux un angle proche de 90°, ce qui évite que la manivelle 15 en rotation n'interfère avec l'introduction des légumes dans le passage à légume 9. De plus, dans le présent mode de réalisation, cet angle est légèrement supérieur à 90° (entre 100° et 120°), la manivelle 15 étant orientée vers le haut, afin d'augmenter le couple transmis par l'utilisateur et d'éviter d'être gêné par le plan de travail sur lequel repose le récipient 2.

La manivelle 15 comporte une tige axiale 17 qui définit l'axe de rotation 16 de la manivelle 15, une tige d'extension radiale 18 qui s'étend à une première extrémité de la tige axiale 17, et un bouton de préhension 19 qui est porté à l'extrémité libre de la tige d'extension radiale 18. Ce bouton de préhension 19 est monté libre en rotation selon un axe 20 parallèle à la tige axiale 17. La manivelle 15 comporte également un pignon denté 21 qui est situé à l'extrémité libre de la tige axiale 17 et est engrené au pignon denté 14 du moyeu 13 de l'organe de coupe 7.

Quand l'organe de travail 7 est dans une position d'utilisation, son seul degré de liberté est sa rotation autour de son axe de rotation 12, du fait du pignon denté 14 de son moyeu 13 qui prend appui sur au moins un moyen de maintien 22 de façon à définir la position de l'outil 8 selon la direction de son axe de rotation 12, et qui coopère avec des moyens de verrouillage permettant d'empêcher tout déplacement dans un plan normal à cet axe 12.

Dans le présent mode de réalisation, les moyens de maintien 22 comprennent un élément de bordure 22 de l'ouverture d'articulation 11, le moyeu 13 comprenant un épaulement annulaire 23 qui est situé entre l'outil 8 et le pignon denté 14 et qui repose sur cet élément de bordure 22. Dans le présent exemple, les moyens de maintien comprennent également au moins un élément de retenue 24 (en l'occurrence, trois) qui est pendu à la paroi inférieure 6 par au moins un organe de liaison 25, chaque élément de retenue 24 définissant, avec la paroi inférieure 6, un espace qui reçoit la périphérie de l'outil 8 en position d'utilisation.

En outre, l'ouverture d'articulation 11 est formée, d'une part, par une portion élargie 26 qui permet, quand l'organe de travail 7 est dans une position de mise en place, le passage du pignon denté 14 du moyeu 13 d'un espace à l'autre entre l'espace de travail et l'espace d'engrènement, et, d'autre part, par une portion restreinte 27 qui prolonge la portion élargie 26 et dont la bordure 22 retient l'épaulement annulaire 23 du moyeu 13. Ainsi la bordure 22 de la portion restreinte 27 forme l'élément de bordure 22 de maintien qui empêche le passage du pignon denté 14 du moyeu 13 d'un espace à l'autre entre l'espace de travail et l'espace d'engrènement.

Dans le présent mode de réalisation, afin de prévenir des passages d'aliments de l'espace de travail à l'espace d'engrènement, la section droite de la portion élargie 26 de l'ouverture d'articulation 11 correspond à celle de l'épaulement annulaire 23, la section de passage du pignon denté 14 étant au plus égale à celle de l'épaulement annulaire 23. Pour la même raison, la section droite de la portion restreinte 27 de l'ouverture d'articulation 11 correspond à celle d'une entretoise cylindrique 28 du moyeu 13 qui est située entre l'outil 8 et l'épaulement annulaire 23 de façon à former un palier lisse pour cette entretoise 28. Ce palier lisse est incomplet du fait que la portion restreinte 27 prolonge la portion élargie 26. Evidemment, la section droite de l'entretoise cylindrique 28 est inférieure à celle de l'épaulement annulaire 23.

Par ailleurs, dans le présent mode de réalisation, les moyens de verrouillage comprennent deux éléments élastiquement déformables 29 qui sont portés par la paroi inférieure 6. Ces deux éléments 29 sont situés de part et d'autre de l'ouverture d'articulation 11 et ils sont disposés de façon à former un point dur dont le franchissement par le moyeu 13 (dans le sens d'un déplacement de la position de mise en place à la position d'utilisation) définit la position d'utilisation de l'organe de travail. De façon plus précise, ici, les deux éléments 29 sont situés à la jonction entre la portion élargie 26 et la portion restreinte 27. Ils forment, en fait, les deux extrémités d'une paroi tombante 30 qui prolonge la bordure 22 de la portion restreinte 27 et qui forme donc le pallier lisse pour l'entretoise cylindrique 28.

Le couvercle 3 comprend également un clapet de fermeture 31 qui possède un orifice 32 adaptée à être traversée par le moyeu 13 de l'organe de travail 7. Ce clapet 31 est monté mobile sur la paroi inférieure 6 entre une position d'ouverture dans laquelle son orifice 32 fait face à la portion élargie 26 de l'ouverture d'articulation 11, et une position de fermeture dans laquelle son orifice 32 fait face à la portion restreinte 27 de cette même ouverture 11. Dans le présent mode de réalisation, le clapet 31 est mobile en translation, la paroi inférieure 6 comportant deux rainures de guidage permettant de guider le mouvement du clapet 31.

En outre, afin d'empêcher des passages d'aliments de l'espace de travail à l'espace d'engrènement le clapet 31 obstrue la portion élargie 26 quand il est en position de fermeture.

De même, la section droite de l'orifice 32 correspond à celle de l'épaulement annulaire 23 de façon à permettre l'entraînement du clapet 31 de sa position d'ouverture à sa position de fermeture et inversement par le déplacement de l'organe de travail 7 de sa position de mise en place à sa position d'utilisation et inversement. De ce fait, l'orifice 32 forme un palier lisse pour l'épaulement annulaire 23. Dans le présent mode de réalisation, ce palier lisse est incomplet.

Par ailleurs, le couvercle 3 comprend une paroi supérieure 33 qui délimite, avec la paroi inférieure 6, l'espace d'engrènement. Dans le présent mode de réalisation, la paroi supérieure 33 comporte un passage 34 permettant le passage de la manivelle 15, et plus précisément, le passage du pignon 21 de cette dernière.

La manivelle 15 est montée de façon amovible et sert de moyen de verrouillage de l'organe de travail 7 en position d'utilisation. Dans le présent exemple, l'organe de travail 7 est verrouillé dans sa position d'utilisation par le pignon denté 21 de la manivelle 15 qui, quand il est engrené avec le pignon denté 14 du moyeu 13, empêche le déplacement de l'organe de travail 7. Le déverrouillage de l'organe de travail 7 en position d'utilisation se fait par le déplacement de la manivelle 15 de sa position d'engrenage à une position de libération, dans la même direction que celle du mouvement du clapet 31 de sa position d'utilisation à sa position de mise en place.

Afin de guider le mouvement de la manivelle 15 et d'assurer l'engrènement, l'espace d'engrènement comprend un espace de guidage 35 dont la section droite correspond sensiblement à celle du pignon denté 21 de la manivelle 15, et dans lequel débouchent les dents du pignon denté 14 du moyeu 13. Cet espace de guidage 35 se trouve dans le prolongement du passage 34. Dans le présent exemple, l'espace de guidage 35 est délimité par le clapet de fermeture 31 et, de ce fait, la caractéristique concernant sa section de passage n'est présente que lorsque que le clapet 31 est dans sa position de fermeture.

Afin d'immobiliser la manivelle 15 en position d'engrenage (et donc de verrouiller l'organe de travail 7 dans sa position d'utilisation), celle-ci comporte une bague 36 qui est montée libre en rotation au tour de la tige axiale 17 et qui comporte des moyens de fixation (en l'occurrence, un filetage) adaptés à coopérer avec des moyens complémentaires de fixation (un l'occurrence, un filetage complémentaire) portés par la périphérie du passage 34. De plus, afin de stabiliser la manivelle 15 en position d'engrenage, le pignon denté 21 de celle-ci comporte, à son extrémité libre, un doigt 37 qui pénètre dans une cavité 38 réalisée dans l'espace de guidage 35. Cette cavité 38 a une section droite qui correspond à celle du doigt 37.

Ainsi, en utilisation, afin de démonter le couvercle 3 pour permettre un changement d'outil 8 ou un nettoyage de l'ensemble des pièces : dans un premier temps, la bague 36 est dévissée du passage 34 ; ceci permet, dans un second temps, la manivelle 35 est retirée de l'espace de guidage 15 ; ensuite, l'outil 8 est déplacé de sa position d'utilisation à sa position de mise en place ce qui entraîne le déplacement du clapet de sa position de fermeture à sa position d'ouverture (lors de ce mouvement, l'outil 8 est dégagé des trois éléments de retenue 24 et l'entretoise cylindrique 28 franchit le point dur défini par les deux éléments élastiquement déformables 29) ; enfin, l'outil 8 est tiré axialement ce qui permet le dégagement du moyeu 13. Afin de remonter le couvercle 3, il suffit de procéder dans l'ordre inverse.

Ainsi, la présente invention permet d'avoir un article culinaire 1 compact, ergonomique tant dans son utilisation que dans le changement de l'outil.

L'invention n'est pas limitée au présent mode de réalisation mais définie par les revendications. Il serait ainsi possible que l'article culinaire soit une essoreuse à salade auquel cas l'outil est formé par un moyen d'entraînement (par exemple une étoile à trois branche) adapté à venir en prise avec le panier à salade afin de l'entraîner en rotation.

## Revendications

1. Couvercle (3) d'un article culinaire (1), adapté à reposer sur un récipient (2), et comprenant un organe de travail (7) amovible monté en rotation, et une manivelle (15) engrenée à l'organe de travail (7) et montée en rotation selon un axe de rotation (16) non parallèle à celui (12) de l'organe de travail (7), **caractérisé en ce que** l'organe de travail (7) comprend un outil (8) et moyeu (13) qui porte un pignon denté (14) par lequel est réalisé l'engrènement avec la manivelle (15) quand l'organe de travail (7) est en position d'utilisation, et **en ce que**, quand l'organe de travail (7) est en position d'utilisation, le pignon denté (14) du moyeu (13) prend appui sur au moins un moyen de maintien (22) de façon à définir la position de l'outil (8) selon la direction de son axe de rotation (12), et coopère avec des moyens de verrouillage permettant d'empêcher tout déplacement de l'outil (8) dans un plan normal à cet axe (12).

2. Couvercle (3) selon la revendication 1, **caractérisé en ce qu'**il comprend une paroi (6) adaptée à obstruer le récipient (2) et à délimiter un espace de travail dans laquelle se trouve l'outil (8) d'un espace d'engrènement dans lequel se trouve le pignon denté (14), la paroi (6) comprenant une ouverture d'articulation (11) traversée par le moyeu (13), un élément de bordure (22) de l'ouverture d'articulation (11) formant l'organe de maintien (22) sur lequel repose un épaulement annulaire (23) du moyeu (13) situé entre l'outil (8) et le pignon denté (14).

3. Couvercle (3) selon la revendication 2, **caractérisé en ce que** l'ouverture d'articulation (11) comprend une portion élargie (26) qui permet, quand l'organe de travail (7) est dans une position de mise en place, le passage du pignon denté (14) du moyeu (13) d'un espace à l'autre, et une portion restreinte (27) qui prolonge la portion élargie (26) et dont la bordure (25) forme l'organe de maintien (22).

4. Couvercle (3) selon la revendication 3, **caractérisé en ce que** la section droite de la portion élargie (26) correspond à celle de l'épaulement annulaire (23) qui est au moins égale à celle du pignon denté (14).

5. Couvercle (3) selon la revendication 3 ou 4, **caractérisé en ce que** la section droite de la portion restreinte (27) correspond à celle d'une entretoise cylindrique (28) du moyeu (13) située entre l'outil (8) et l'épaulement annulaire (23).

6. Couvercle (3) selon l'une des revendications 3 à 5, **caractérisé en ce que** les moyens de verrouillage comprennent deux éléments élastiquement déformables (29) portés par la paroi (6), situés de part et d'autre de l'ouverture d'articulation (11) et disposés de façon à former un point dur dont le franchissement par le moyeu (13) définit la position d'utilisation de l'organe de travail (7).

7. Couvercle (3) selon la revendication 6 dépendante de la revendication 5, **caractérisé en ce que** les éléments élastiquement déformables (29) sont situés à la jonction entre la portion élargie (26) et la portion restreinte (27).

8. Couvercle (3), selon l'une des revendications 3 à 7, **caractérisé en ce qu'**il comprend un clapet de fermeture (31) qui possède un orifice (32) adapté à être traversé par le moyeu (13) et qui est mobile entre une position d'ouverture dans laquelle l'orifice (21) fait face à la portion élargie (26) de l'ouverture d'articulation (11), et une position de fermeture dans laquelle son orifice (32) fait face à la portion restreinte (27) et dans laquelle il obstrue la portion élargie (26).

9. Couvercle (3) selon la revendication 8, **caractérisé en ce que** la section droite de l'orifice (32) correspond à celle de l'épaulement annulaire (23).

10. Couvercle (3) selon l'une des revendications 1 à 9, **caractérisée en ce que** les moyens de verrouillage comprennent le pignon denté (21) de la manivelle (15) quand cette dernière est dans sa position d'engrenage.

11. Couvercle (3) selon la revendication 10, **caractérisé en ce que** la manivelle (15) comporte une bague (36) montée libre en rotation et comportant des moyens de fixation adaptés à coopérer avec des moyens complémentaires de fixation et à définir la position d'engrenage de la manivelle (15).

12. Couvercle (3) selon la revendication 10 ou 11, **caractérisé en ce que** le pignon denté (21) de la manivelle (15) comporte, à son extrémité libre, un doigt (37) pénétrant dans une cavité (38) de section droite correspondant à celle du doigt (37), de façon à stabiliser la manivelle (15) dans sa position d'engrenage.

13. Couvercle (3) selon l'une des revendications 10 à 12 dépendantes de la revendication 8, **caractérisé en ce que**, quand le clapet (31) est dans sa position de fermeture, l'espace d'engrènement comprend un espace de guidage (35) dans lequel débouchent les dents du pignon denté (14) du moyeu (13) et dont la section droite correspond sensiblement à celle du pignon denté (21) de la manivelle (15).

14. Couvercle (3) selon l'une des revendications 2 à 13, **caractérisé en ce que** la paroi (6) comprend au moins un élément de retenue (24) pendu à la paroi (6) définissant avec celle-ci un espace recevant la périphérie de l'outil (8) quand l'organe de travail (7) est en position d'utilisation.

15. Ustensile culinaire (1) comprenant un récipient (2) et un couvercle (3) conforme à l'une des revendications 1 à 14 reposant sur le récipient (2).

## Claims

1. Lid (3) of a culinary utensil (1), designed to rest on a container (2), and including a detachable rotatably mounted cutting unit (7), and a crank (15) meshed with the cutting unit (7) and mounted rotatably about an axis of rotation (16) non-parallel to that (12) of the cutting unit (7), **characterised in that** the cutting unit (7) includes a tool (8) and a hub (13) which carries a toothed pinion (14) by which is provided the meshing action with the crank (15) when the cutting unit (7) is in the usage position, and **in that**, when the cutting unit (7) is in the usage position, the toothed pinion (14) of the hub (13) is supported on at least one maintaining unit (22) so as to define the position of the tool (8) in the direction of its axis of rotation (12), and cooperates with a locking unit to prevent any displacement of the tool (8) in a plane normal to this axis (12).

2. Lid (3) according to claim 1, **characterised in that** it includes a wall (6) designed to close off the container (2) and to define a working space in which the tool (8) is located, a meshing space in which the toothed gear pinion (14) is located, the wall (6) including a pivot opening (11) traversed by the hub (13), a boundary element (22) of the pivot opening (11) forming the maintaining unit (22) whereon rests an annular shoulder (23) of the hub (13) located between the tool (8) and the toothed pinion (14).

3. Lid (3) according to claim 2, **characterised in that** the pivot opening (11) includes a widened portion (26) which, when the cutting unit (7) is in a placement position, enables the passage of the toothed pinion (14) of the hub (13) from one space to the other, and a narrow portion (27) which extends the widened portion (26) and of which the edge (25) forms the maintaining unit (22).

4. Lid (3) according to claim 3, **characterised in that** the cross-section of the widened portion (26) corresponds to that of the annular shoulder (23) which is at least equal to that of the toothed pinion (14).

5. Lid (3) according to claim 3 or 4, **characterised in that** the cross-section of the narrow portion (27) corresponds to that of a cylindrical spacer (28) of the hub (13) located between the tool (8) and the annular shoulder (23).

6. Lid (3) according to any one of claims 3 to 5, **characterised in that** the locking unit includes two resiliently deformable elements (29) supported by the wall (6), located on both sides of the pivot opening (11) and disposed so as to form a snap point which when crossed by the hub (13) defines the usage position of the cutting unit (7).

7. Lid (3) according to claim 6 dependent on claim 5, **characterised in that** the resiliently deformable elements (29) are located at the junction between the widened portion (26) and the narrow portion (27).

8. Lid (3), according to any one of claims 3 to 7, **characterised in that** it includes a closure flap (31) which has an aperture (32) designed to be traversed by the hub (13) and which is mobile between an opening position in which the aperture (21) faces the widened portion (26) of the pivot opening (11), and a closure position in which the aperture (32) faces the narrow portion (27) and in which it closes off the widened portion (26).

9. Lid (3) according to claim 8, **characterised in that** the cross-section of the aperture (32) corresponds to that of the annular shoulder (23).

10. Lid (3) according to any one of claims 1 to 9, **characterised in that** the locking unit includes the toothed pinion (21) of the crank (15) when the latter is in its meshed position.

11. Lid (3) according to claim 10, **characterised in that** the crank (15) includes a ring (36) mounted freely in rotation and having fixing means designed to cooperate with complementary fixing means and defining the meshed position of the crank (15).

12. Lid (3) according to claim 10 or 11, **characterised in that** the toothed pinion (21) of the crank (15) includes, at its free end, a finger (37) penetrating into a cavity (38) having a cross-section corresponding to that of the finger (37), so as to stabilise the crank (15) in its meshed position.

13. Lid (3) according to any one of claims 10 to 12 dependent on claim 8, **characterised in that**, when the flap (31) is in its closure position, the meshing space includes a guide space (35) into which emerge the teeth of the toothed pinion (14) of the hub (13) and of which the cross-section corresponds substantially to that of the toothed pinion (21) of the crank (15).

14. Lid (3) according to any one of claims 2 to 13, **characterised in that** the wall (6) includes at least one retaining element (24) suspended on the wall (6) defining therewith a space receiving the periphery of the tool (8) when the cutting unit (7) is in the usage position.

15. Culinary utensil (1) including a container (2) and a lid (3) according to any one of claims 1 to 14 rested on the container (2).

## Patentansprüche

1. Deckel (3) für einen Küchengegenstand (1), der an einem Behälter (2) anbringbar ist und ein abnehmbares, drehbar angebrachtes Betätigungselement (7) und eine Kurbel (15) umfasst, die in das Betätigungselement (7) eingreift und in Drehung entlang einer Drehachse (16) nicht parallel zu jener (12) des Betätigungselements (7) montiert ist, **dadurch gekennzeichnet, dass** das Betätigungselement (7) ein Werkzeug (8) und eine Nabe (13) umfasst, die ein Zahnritzel (14) trägt, durch das das Eingreifen in die Kurbel (15) erfolgt, wenn sich das Betätigungselement (7) in Verwendungsposition befindet, und dass, wenn sich das Betätigungselement (7) in Verwendungsposition befindet, das Zahnritzel (14) der Nabe (13) auf mindestens einem Haltemittel (22) aufliegt, um die Position des Werkzeugs (8) in Richtung seiner Drehachse (12) zu definieren, und mit Verriegelungsmitteln zusammenwirkt, die es ermöglichen, jede Verschiebung des Werkzeugs (8) in einer Ebene normal auf diese Achse (12) zu verhindern.

2. Deckel (3) nach Anspruch 1, **dadurch gekennzeichnet, dass** er eine Wand (6) umfasst, die dazu vorgesehen ist, den Behälter (2) zu verschließen und einen Betätigungsraum, in dem sich das Werkzeug (8) befindet, von einem Eingriffsraum, in dem sich das Zahnritzel (14) befindet, zu begrenzen, wobei die Wand (6) eine Gelenköffnung (11) umfasst, durch die die Nabe (13) verläuft, wobei ein Umrandungselement (22) der Gelenköffnung (11) das Halteelement (22) bildet, auf dem ein ringförmiger Absatz (23) der Nabe (13) aufliegt, der sich zwischen dem Werkzeug (8) und dem Zahnritzel (14) befindet.

3. Deckel (3) nach Anspruch 2, **dadurch gekennzeichnet, dass** die Gelenköffnung (11) einen erweiterten Abschnitt (26), der, wenn sich das Betätigungselement (7) in einer Anbringungsposition befindet, den Übergang des Zahnritzels (14) der Nabe (13) von einem Raum zum anderen ermöglicht, und einen verengten Abschnitt (27) umfasst, der den erweiterten Abschnitt (26) verlängert, und dessen Umrandung (25) das Halteelement (22) bildet.

4. Deckel (3) nach Anspruch 3, **dadurch gekennzeichnet, dass** der Querschnitt des erweiterten Abschnitts (26) jenem des ringförmigen Absatzes (23) entspricht, der mindestens gleich jenem des Zahnritzels (14) ist.

5. Deckel (3) nach Anspruch 3 oder 4, **dadurch gekennzeichnet, dass** der Querschnitt des verengten Abschnitts (27) jenem einer zylindrischen Querstrebe (28) der Nabe (13) entspricht, die sich zwischen dem Werkzeug (8) und dem ringförmigen Absatz (23) befindet.

6. Deckel (3) nach einem der Ansprüche 3 bis 5, **dadurch gekennzeichnet, dass** die Verriegelungsmittel zwei elastisch verformbare Elemente (29) umfassen, die von der Wand (6) getragen werden und sich beiderseits der Gelenköffnung (11) befinden und derart angeordnet sind, dass sie einen festen Punkt bilden, dessen Überschreitung durch die Nabe (13) die Verwendungsposition des Betätigungselements (7) definiert.

7. Deckel (3) nach Anspruch 6 in Abhängigkeit von Anspruch 5, **dadurch gekennzeichnet, dass** die elastisch verformbaren Elemente (29) an der Verbindung zwischen dem erweiterten Abschnitt (26) und dem verengten Abschnitt (27) angeordnet sind.

8. Deckel (3) nach einem der Ansprüche 3 bis 7, **dadurch gekennzeichnet, dass** er eine Verschlussklappe (31) umfasst, die eine Öffnung (32) besitzt, die dazu vorgesehen ist, von der Nabe (13) durchquert zu werden, und die zwischen einer Öffnungsposition, in der die Öffnung (21) dem erweiterten Abschnitt (26) der Gelenköffnung (11) gegenüber liegt, und einer Verschlussposition, in der ihre Öffnung (32) dem verengten Abschnitt (27) gegenüber liegt und in der sie den erweiterten Abschnitt (26) verschließt, beweglich ist.

9. Deckel (3) nach Anspruch 8, **dadurch gekennzeichnet, dass** der Querschnitt der Öffnung (32) jenem des ringförmigen Absatzes (23) entspricht.

10. Deckel (3) nach einem der Ansprüche 1 bis 9, **dadurch gekennzeichnet, dass** die Verriegelungsmittel ein Zahnritzel (21) der Kurbel (15) umfassen, wenn sich letztgenannte in ihrer Eingriffsposition befindet.

11. Deckel (3) nach Anspruch 10, **dadurch gekennzeichnet, dass** die Kurbel (15) einen Ring (36) umfasst, der frei drehbar montiert ist und Befestigungsmittel umfasst, die dazu vorgesehen sind, mit komplementären Befestigungsmitteln zusammenzuwirken und die Eingriffsposition der Kurbel (15) zu definieren.

12. Deckel (3) nach Anspruch 10 oder 11, **dadurch gekennzeichnet, dass** das Zahnritzel (21) der Kurbel (15) an seinem freien Ende einen Finger (37) umfasst, der in einen Hohlraum (38) mit einem Querschnitt, der jenem des Fingers (37) entspricht, eindringt, um die Kurbel (15) in der Eingriffsposition zu stabilisieren.

13. Deckel (3) nach einem der Ansprüche 10 bis 12 in Abhängigkeit von Anspruch 8, **dadurch gekennzeichnet, dass**, wenn sich die Klappe (31) in ihrer Verschlussposition befindet, der Eingriffsraum einen Führungsraum (35) umfasst, in den die Zähne des Zahnritzels (14) der Nabe (13) münden, und dessen Querschnitt im Wesentlichen jenem des Zahnritzels (21) der Kurbel (15) entspricht.

14. Deckel (3) nach einem der Ansprüche 2 bis 13, **dadurch gekennzeichnet, dass** die Wand (6) mindestens ein Halteelement (24) umfasst, das an der Wand (6) aufgehängt ist und mit dieser einen Raum definiert, der die Peripherie des Werkzeugs (8) aufnimmt, wenn sich das Betätigungselement (7) in Verwendungsposition befindet.

15. Küchengegenstand (1), umfassend einen Behälter (2) und einen Deckel (3) nach einem der Ansprüche 1 bis 14, der auf dem Behälter (2) aufliegt.
